# EUROPEAN PATENT APPLICATION

(11) **EP 4 318 859 A1**
(43) Date of publication of application: **07.02.2024**
(21) Application number: 22781390.4
(22) Date of filing: 14.02.2022
(51) Int. Cl.: H02J 7/00, H02H 7/18, H02H 3/06

(54) **BATTERY PROTECTION UNIT AND CONTROL METHOD FOR BATTERY PROTECTION UNIT**

(30) Priority: 29.03.2021 KR 20210040464
(71) Applicant: LS Electric Co., Ltd., Gyeonggi-do 14119 (KR)
(72) Inventor: SIM, Jungwook, Anyang-si, Gyeonggi-do 14118 (KR); YUN, Dongjin, Anyang-si, Gyeonggi-do 14118 (KR); KANG, Sunghee, Anyang-si, Gyeonggi-do 14118 (KR); SONG, Woonghyeob, Anyang-si, Gyeonggi-do 14118 (KR)
(74) Representative: K&L Gates LLP
(86) International application number: PCT/KR2022/002157
(87) International publication number: WO 2022/211269

(57) **Abstract**

The present invention comprises: a solid-state circuit breaker, which is arranged between a battery system and a line and includes a semiconductor switch for providing an electrical connection or insulation between the battery system and the line according to the voltage applied to a gate terminal; an interrupter switch for providing a physical connection or separation between the solid-state circuit breaker and the line; and a rack battery management system which controls a gate driver applying the gate voltage, so as to provide insulation between the battery system and the line according to the result of sensing a current flowing between the battery system and the line, and which controls the interrupter switch to physically separate the solid-state circuit breaker from the line.

## Description

### Technical Field

The present disclosure relates to a battery protection unit (BPU).

### Background Art

In general, a battery protection unit (BPU), which is a device for protecting a battery system used in an energy storage system (ESS), or the like, may include a battery system configured in units of racks or modules, and a rack battery management system (RBMS) that protects the battery system.

The rack battery management system may manage charge/discharge mode switching of the battery system, and may perform voltage, current, and temperature monitoring to protect the battery system. Furthermore, according to a result of the monitoring, a current flowing out of the battery system or flowing into the battery system may be cut off to protect a load from a short-circuit current flowing in from the battery system during the failure of a power conditioning system (PCS), or protect the battery system from a fault current, such as a short circuit or ground fault, introduced by a fault on a line between the power conditioning system (PCS) and the battery system. For such a cut-off function, the battery protection unit may include a molded case circuit breaker (MCCB) that opens an electric circuit to cut off the line when an overcurrent is detected, and a fuse that is blown by heat generated due to the overcurrent to insulate the battery system from the line. In addition, the circuit breaker and the fuse may be disposed between the line to which the load is connected and the battery system to prevent an overcurrent generated from the battery system or the line from flowing into the load or the battery system.

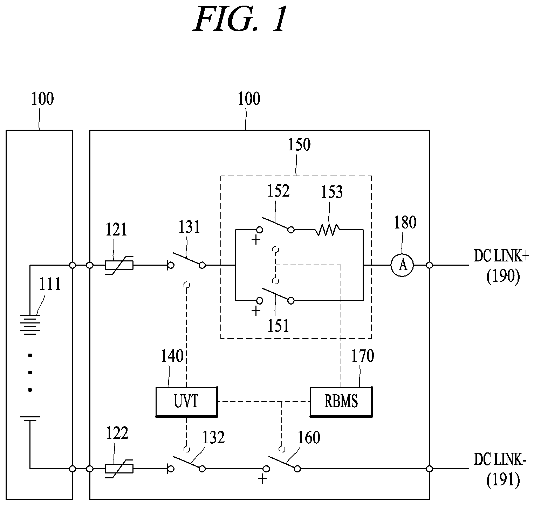

FIG. 1 is a diagram showing a structure of a typical battery protection unit 100 in which a molded case circuit breaker and fuses are disposed between a battery system and a line.

Referring to FIG. 1, a typical battery protection unit 100 may be connected between a battery system 110 having a battery rack 111 in which a plurality of batteries or cells are stacked in a rack form, and a line (DC link plus terminal (DC link +) 190, DC link minus terminal (DC link -) 191) connected to a load. In this case, a plus terminal (+) of the battery rack 111 and the DC link plus terminal 190 may be connected through a first fuse 121 and a first MCCB 131, and a minus terminal (-) of the battery rack 111 and the DC link minus terminal 191 may be connected through a second fuse 122 and a second MCCB 132.

Moreover, a pre-charge relay 150 may be provided between the first MCCB 131 and the DC link plus terminal 190. The pre-charge relay 150 may include a plurality of main contactors 151, 152 connected in parallel to each other, and either one 152 of the main contactors may be connected to a resistor 153 having a predetermined value to constitute a bypass electric circuit that suppresses an inrush current generated when a load or battery is initially connected thereto. Besides, an auxiliary contactor 160 may be provided between the second MCCB 132 and the DC link minus terminal 191. In addition, the first and second MCCBs 131, 132 may further include an under voltage tripcoil (UVT) 140 so as to maintain a trip state at a voltage below an operating voltage (e.g., rated voltage).

Furthermore, an ammeter 180 may be provided between the pre-charge relay 150 and the DC link plus terminal 190. Besides, a RBMS 170 that controls the first and second MCCBs 131, 132, the plurality of main contactors 151, 152 and the auxiliary contactor 160 according to a current sensed by the ammeter 180 between the battery system 110 and the line (DC link plus terminal (DC link +) 190) may be provided.

In the case of the battery protection unit 100 configured as described above, when an overcurrent such as a short-circuit current or a fault current is generated, primary protection for the battery system 110 or loads connected to the line may be provided while the fuses 121, 122 are blown by heat generated due to the inflow of the overcurrent. Furthermore, secondarily, under the control of the RBMS 170, the first and second MCCBs 131, 132 may open an electric circuit to cut off line connection between the load and the battery so as to provide secondary protection for the battery system 110 or the loads.

However, in the case of the foregoing MCCB, which is a mechanical switch, there is a problem in that it takes a long time period to cut off the line. In addition, in the case of a fuse, there is a problem that the line is maintained in a connected state until it is completely blown. As a result, in the typical battery protection unit 100, when a short-circuit current or a fault current is generated, in case where the fuse is not completely blown before the MCCB completely cuts off the line, there is a problem in that a short-circuit current generated from the battery system 110 may flow into the load through the line or a fault current generated due to a fault of the line may flow into the battery system 110. Moreover, there is a problem in that the short-circuit current or the fault current may cause damage to the battery system 110 or the load connected to the line.

Besides, in the case of the fuse, a connection between the battery system 110 and the line may be cut off by fusing, and when the fuse is blown due to a short-circuit current or a fault current (hereinafter collectively referred to as a fault current), the connection between the battery system 110 and the line may be restored by the replacement of the fuse. Therefore, even when a fault in the line is resolved and the state of a current flowing in from the line is restored, a connection between the battery system 110 and the line is not automatically restored, and accordingly, there is a problem in that a user's manual work for replacing the fuse is required whenever performing an interruption operation of the battery protection unit 100.

### Disclosure of Invention

### Technical Problem

An aspect of the present disclosure is to solve the foregoing problems and other problems, and to provide a battery protection unit capable of preventing a fault current generated due to a short circuit of a battery or a fault of a line from flowing into a load or the battery before a fuse is completely blown, and a control method of the battery protection unit.

In addition, another aspect of the present disclosure is to provide a battery protection unit that prevents a burnout of a fuse from a fault current generated due to a short circuit of a battery or a fault of a line to automatically restore a connection between a battery system and the line according to the restoration of a current state without a user's manual work for replacing the fuse, and a control method of the battery protection unit.

### Solution to Problem

In order to achieve the foregoing and other objectives, according to an aspect of the present disclosure, there is provided a battery protection unit (BPU) connecting between a battery system and a line, the battery protection unit including a solid-state circuit breaker disposed between the battery system and the line, the solid-state circuit breaker including a semiconductor switch electrically connecting or insulating between the battery system and the line according to a gate voltage applied to a gate terminal thereof, a cut-off switch physically connecting or separating between the solid-state circuit breaker and the line, and a rack battery management system (RBMS) that controls a gate driver applying the gate voltage according to a result of sensing a current flowing between the battery system and the line to insulate between the battery system and the line, and controls the cut-off switch to physically separate the solid-state circuit breaker from the line when the battery system is connected to the line.

According to an embodiment, the solid-state circuit breaker may include a first semiconductor switch having a source terminal and a drain terminal disposed to form a current flow from the battery system to the line, a second semiconductor switch connected in series to the first semiconductor switch, the second semiconductor switch having a source terminal and a drain terminal disposed to form a current flow from the line to the battery system, and a first gate driver that applies a gate voltage to a gate terminal of the first semiconductor switch, and a second gate driver that applies a gate voltage to a gate terminal of the second semiconductor switch under the control of the rack battery management system, wherein the rack battery management system controls at least one of the first and second gate drivers to apply a gate voltage having a preset voltage when the battery system is physically connected to the line through the solid-state circuit breaker so as to electrically connect between the battery system and the line.

According to an embodiment, the rack battery management system may control the battery system to operate in either one of a discharge mode in which a current flows out of the battery system or a charge mode in which the battery system receives a current from the line, and control either one of the first and second gate drivers to apply a gate voltage below the preset voltage according to a result of sensing the current, wherein either one gate driver whose gate voltage is controlled according to the result of sensing the current is different from each other according to an operation mode of the battery system.

According to an embodiment, the rack battery management system may control the first gate driver to apply a gate voltage below the preset voltage when the battery system is in a discharge mode, and control the second gate driver to apply a gate voltage below the preset voltage when the battery system is in a charge mode.

According to an embodiment, the first and second semiconductor switches may be configured with N-channel MOSFET devices having source terminals and drain terminals disposed in opposite directions to each other, and configured to include diodes, respectively, disposed in reverse directions with respect to current flows of the N-channel MOSFET devices.

According to an embodiment, the solid-state circuit breaker may include a current sensor that senses a current flowing between the battery system and the line, wherein the current sensor is a GMR sensor using a giant magneto-resistance (GMR) device.

According to an embodiment, the plus terminal (+) and the minus terminal (-) of the battery system may be connected to the semiconductor switch by way of fuses, respectively.

According to an embodiment, the preset voltage may be a threshold voltage for allowing the input terminal and the output terminal of the first semiconductor switch or the second semiconductor switch to be conducted to each other.

In order to achieve the foregoing and other objectives, according to an aspect of the present disclosure, there is provided a method of controlling a battery protection unit (BPU) comprising a solid-state circuit breaker connecting between a battery system and a line, the method including controlling, by a rack battery management system (RBMS) of the battery protection unit, a cut-off switch disposed between the solid-state circuit breaker and the line to physically connect between the battery system and the line, controlling, by the rack battery management system, a semiconductor switch provided in the solid-state circuit breaker to electrically connect between the battery system and the line, detecting, by the rack battery management system, an overcurrent above a preset magnitude from a current flowing between the battery system and the line, controlling, by the rack battery management system, a gate driver that applies a gate voltage to the semiconductor switch according to a result of the detection to insulate between the battery system and the line, and controlling, by the rack battery management system, the cut-off switch to physically separate the solid-state circuit breaker from the line.

According to an embodiment, the solid-state circuit breaker may include a first semiconductor switch having a source terminal and a drain terminal disposed to form a current flow from the battery system to the line, a second semiconductor switch connected in series to the first semiconductor switch, the second semiconductor switch having a source terminal and a drain terminal disposed to form a current flow from the line to the battery system, and a first gate driver that applies a gate voltage to a gate terminal of the first semiconductor switch, and a second gate driver that applies a gate voltage to a gate terminal of the second semiconductor switch under the control of the rack battery management system.

According to an embodiment, the electrically connecting between the battery system and the line may include driving the battery system in either one of a discharge mode and a charge mode, and controlling at least one of the first and second gate drivers to apply a gate voltage above a preset threshold voltage according to an operation mode of the battery system.

According to an embodiment, the controlling of the gate driver to insulate between the battery system and the line may be controlling different gate drivers to apply a gate voltage below a preset threshold voltage according to an operation mode of the battery system.

According to an embodiment, the controlling of different gate drivers according to the operation mode of the battery system may include controlling the first gate driver to apply a gate voltage below the threshold voltage when the battery system is driven in a discharge mode, and controlling the second gate driver to apply a gate voltage below the threshold voltage when the battery system is driven in a charge mode.

According to an embodiment, the controlling of the gate driver to insulate between the battery system and the line may be controlling both the first gate driver and the second gate driver to apply a gate voltage below a preset threshold voltage.

According to an embodiment, the solid-state circuit breaker may include a GMR sensor using a giant magneto-resistance (GMR) as a current sensor, wherein the detecting of an overcurrent is detecting the overcurrent from a current flowing between the battery system and the line through the GMR sensor.

### Advantageous Effects of Invention

The effects of a battery protection unit and a control method of the battery protection unit according to the present disclosure will be described as follows.

According to at least one of embodiments of the present disclosure, a battery system and a line may be connected to each other through a semiconductor switch, thereby greatly reducing a time period for disconnecting the line subsequent to detection of a fault current. Accordingly, the present disclosure has an effect of preventing damage to a load or a battery due to an inflow of a fault current.

In addition, according to at least one of embodiments of the present disclosure, a battery system and a line may be connected through a semiconductor switch, thereby insulating between the battery system and the line before a fuse is blown when a fault current is generated. Therefore, there is an effect capable of automatically restoring a connection between the battery system and the line as the current state is restored without replacing the fuse.

### Brief Description of Drawings

FIG. 1 is a circuit diagram showing a structure of a typical battery protection unit.
FIG. 2 is a circuit diagram showing a structure of a battery protection unit in which a battery system and a line are connected through semiconductor switches according to an embodiment of the present disclosure.
FIG. 3 is a circuit diagram showing a structure of semiconductor switches connecting between the battery system and the line in the battery protection unit shown in FIG. 2.
FIG. 4 is a graph showing overcurrent detection performance of a GMR sensor provided in a battery protection unit according to an embodiment of the present disclosure.
FIG. 5 is a flowchart showing an operation process of an RBMS provided in a battery protection unit according to an embodiment of the present disclosure.

### Mode for the Invention

It is noted that the technical terms used herein are used only to describe specific implementations and are not intended to limit the invention. A singular representation used herein may include a plural representation unless it represents a definitely different meaning from the context. In general, suffixes such as "module" and "unit" may be used to refer to elements or components. Use of such suffixes herein is merely intended to facilitate description of the specification, and the suffix itself is not intended to give any special meaning or function.

In this specification, the terms "comprising" and "including" should not be construed to necessarily include all of the elements or steps disclosed herein, and should be construed not to include some of the elements or steps thereof, or should be construed to further include additional elements or steps.

In describing the technology disclosed in this specification, if a detailed explanation for a related known function or construction is considered to unnecessarily divert the gist of the present disclosure, such explanation has been omitted but would be understood by those skilled in the art.

Also, it should be understood that the accompanying drawings are merely illustrated to easily explain the concept of the invention, and therefore, they should not be construed to limit the technological concept disclosed herein by the accompanying drawings, and the concept of the present disclosure should be construed as being extended to all modifications, equivalents, and substitutes included in the concept and technological scope of the invention. In addition, it will be understood that the implementations described below, as well as combinations of implementations, are changes, equivalents, or substitutes included in the scope of the present disclosure and correspond to the scope of the present disclosure.

First, in order to provide a thorough understanding of the present disclosure, the basic principle of the present disclosure will be described. The present disclosure may include a semiconductor switch configured with a power semiconductor having a high switching frequency instead of a molded case circuit breaker that requires a relatively long time period to cut off a circuit as in an existing MCCB to connect between a battery system 110 and a line (DC link + 190, DC link - 191) using a solid-state circuit breaker (SSCB) capable of high-speed circuit interruption, thereby disconnecting between the battery system 110 and the line (DC link + 190, DC link - 191) within a shorter time period when a fault occurs in the battery system 110 or the line. As a result, it may be possible to prevent the battery system 110 or loads connected to the line from being burn out due to a fault current, and to cut off a circuit before fuses connected to the battery system 110 are blown so as to prevent the fuses from being blown.

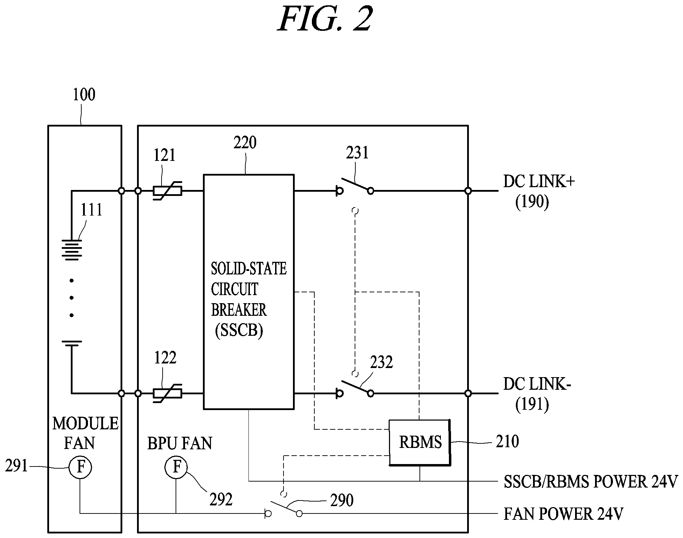

FIG. 2 is a circuit diagram showing a structure of a battery protection unit 200 in which a battery system and a line are connected through semiconductor switches according to such an embodiment of the present disclosure.

Referring to FIG. 2, for the battery protection unit 200 according to an embodiment of the present disclosure, a battery system 110 having a battery rack 111 in which a plurality of batteries or cells are stacked in a rack form and a line (DC link plus terminal (DC link + 190), DC link minus terminal (DC link - 191)) are connected through a circuit breaker including semiconductor switches, that is, a solid-state circuit breaker (SSCB) 220.

In this case, the plus terminal (+) and the minus terminal (-) of the battery system 110 may be respectively connected to the solid-state circuit breaker 220, the plus terminal (+) of the battery system 110 and the solid-state circuit breaker 220 may be connected through the first fuse 121, and the minus terminal (-) of the battery system 110 and the solid-state circuit breaker 220 may be connected through the second fuse 122.

The first fuse 121 and the second fuse 2 may be provided to protect the battery system 110 by fusing in the event of an inflow of an overcurrent, and to protect the battery system 110 in an exceptional situation such as a failure or an abnormal operation of the solid-state circuit breaker 220.

Meanwhile, the DC link plus terminal (+) 190 and the DC link minus terminal (-) 191 may be respectively connected to the solid-state circuit breaker 220. The DC link plus terminal (+) 190 may be connected to the plus terminal (+) of the battery system 110 through the solid-state circuit breaker 220. Furthermore, the DC link minus terminal (-) 191 may be connected to the minus terminal (-) of the battery system 110 through the solid-state circuit breaker 220. The DC link plus terminal (+) 190 and the solid-state circuit breaker 220 may be connected through a first cut-off switch 231, and the DC link minus terminal (-) 191 and the solid-state circuit breaker 220 may be connected through a second cut-off switch 232.

The first cut-off switch 231 and the second cut-off switch 232 may be switches for physically disconnecting between a line (DC link plus terminal (+) 190, DC link minus terminal (-) 191) and the solid-state circuit breaker 220.

The first cut-off switch 231 and the second cut-off switch 232, which are mechanical switches, may physically cut off a connection between the line and the battery system 110 though a relatively long time period is required to cut off a circuit, and when a fault current is detected, a semiconductor switch unit of the solid-state circuit breaker 220 having a high switching speed may primarily cut off an electrical connection between the line and the battery system 110, and then secondarily cut off a physical connection to safely protect the battery system 110 and the load from being burned out.

Meanwhile, a rack battery management system (RBMS) 210, which performs the role of a control unit of the battery protection unit 200, may manage charge/discharge mode switching of the battery system 110 to perform voltage, current and temperature monitoring.

In addition, the solid-state circuit breaker 220 may be controlled to cut off a current flowing out of the battery system 110 or flowing into the battery system 110 according to a result of the monitoring. That is, the RBMS 210 may control the solid-state circuit breaker 220 to sense a current flowing into the battery system 110 from the line (DC link plus terminal (+) 190, DC link minus terminal (-) 191) and a current flowing out of the system 110 to the line, and may determine whether a fault current has been generated based on a result of sensing the current.

According to a result of the determination, the semiconductor switch unit of the solid-state circuit breaker 220 may be controlled to cut off an electrical connection between the line and the battery system 110, and subsequently, the first and second cut-off switches 231, 232 may be controlled to physically separate the battery system 110 from the line.

In addition, the RBMS 210 may control a fan switch 290 that turns on or off the driving of a BPU fan 292 for cooling an inside of the battery protection unit 200 and a module fan 291 for cooling the battery system 110, and control a rotational speed (e.g., revolutions per minute (RPM)) of the BPU fan 292 and the module fan 291 when the BPU fan 292 and the module fan 291 are driven.

In order to drive the RBMS 210, the battery protection unit 200 according to an embodiment of the present disclosure may receive power (e.g., SSCB/RBMS POWER 24 V) for driving the RBMS 210 and the solid-state circuit breaker 220 from an external power source, and the external power source may be configured to supply driving power (e.g., FAN POWER 24V) for driving the BPU fan 292 and the module fan 291.

Meanwhile, as described above, the RBMS 210 may control an overall operation of the solid-state circuit breaker 220. Therefore, the RBMS 210 may be a control unit of the solid-state circuit breaker 220, and in this case, the control unit of the battery protection unit 200 according to an embodiment of the present disclosure may also perform a function of the control unit of the solid-state circuit breaker 220.

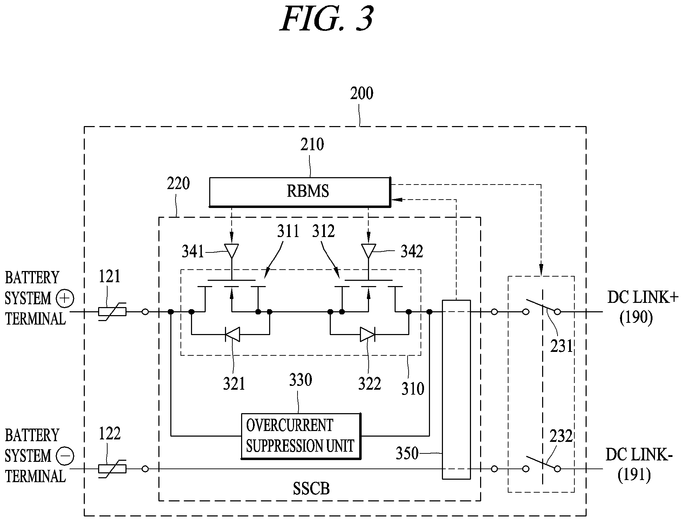

Hereinafter, a structure of the battery protection unit 200 according to an embodiment of the present disclosure in which the control unit of the battery protection unit 200 performs the function of the control unit of the solid-state circuit breaker 220 will be described with reference to FIG. 3.

Referring to FIG. 3, the solid-state circuit breaker 220 according to an embodiment of the present disclosure may include a semiconductor switch unit 310 including a first semiconductor switch 311 and a second semiconductor switch 312 capable of being turned on or off and connected in series to each other, first and second cut-off switches 231, 232, first and second gate drivers 341, 342, an overvoltage suppression unit 330, a current sensor 350 and a RBMS 210 between the battery system 110 and the line (DC link plus terminal (+) 190, DC link minus terminal (-) 191).

In general, when the battery is discharged, a current flow from the battery system 110 to the line may be formed. On the contrary, when charging the battery, a current flow from the line to the battery system 110 may be formed. Accordingly, the solid-state circuit breaker 220 may be configured to cut off both a current flow from the battery system 110 to the line as well as a current flow from the line to the battery system 110.

For such two-way cut-off, the first semiconductor switch 111 and the second semiconductor switch 112, as shown in FIG. 3, may have sources and drains thereof disposed in opposite directions. In this case, the first semiconductor switch 311 and the second semiconductor switch 312 may be semiconductor switches configured with N-channel MOSFET devices.

The first semiconductor switch 311 and the second semiconductor switch 312 may further include first and second diodes 321, 322 disposed in opposite directions to the flow of a current to prevent damage to the MOSFET devices due to a reverse voltage when a circuit is cut off due to a fault current. In this case, an anode and a cathode of each of the first and second diodes 321, 322 may be connected to a source terminal and a drain terminal of each of the MOSFET devices 311, 312.

Therefore, the first diode 321 may be connected in parallel to a MOSFET device of the first semiconductor switch 311 and disposed in a reverse direction with respect to a current flowing from the plus terminal (+) of the battery system 110 to the DC link plus terminal (+) 190. In addition, the second diode 322 may be connected in parallel to a MOSFET device of the second semiconductor switch 312 and disposed in a reverse direction with respect to a current flowing from the DC link plus terminal (+) 190 to the plus terminal (+) of the battery system 110.

As described above, a solid-state circuit breaker 10 according to an embodiment of the present disclosure may include the first semiconductor switch 111 and the second semiconductor switch 112 configured in a complementary symmetrical manner to cut off any fault current flowing in both directions.

Meanwhile, the overvoltage suppression unit 330 may prevent an overvoltage from being formed across the semiconductor switch unit 310 due to a residual current when the solid-state circuit breaker 220 cuts off the circuit due to a fault current.

The overvoltage suppression unit 330 may include a snubber circuit or a device for suppressing an overvoltage, for example, a transient voltage suppressor (TVS) device. Alternatively, the overvoltage suppression unit 330 may include free-wheeling circuits configured with at least one diode and a resistor and connected to both ends of the semiconductor switch unit 310, respectively.

Furthermore, the current sensor 350 may sense the magnitude of a current flowing into the solid-state circuit breaker 220 or a current flowing out through the solid-state circuit breaker 220. In addition, when an overcurrent exceeding a preset magnitude is detected as a result of sensing the magnitude of the current, a signal indicating the occurrence of an overcurrent may be transmitted to the RBMS 210 performing the role of the control unit of the solid-state circuit breaker 220.

Meanwhile, the current sensor 350 may be disposed between the semiconductor switch unit 310 and the DC link plus terminal (+) 190 of the battery system 110 to measure a magnitude of an output current flowing out of the semiconductor switch unit 310 to a load through a line. Alternatively, the current sensor 350 may measure a magnitude of an input current flowing in from the DC link plus terminal (+) 190 to charge the battery system 110.

In addition, the current sensor 350 may be disposed between the semiconductor switch unit 310 and the DC link plus terminal (+) 190 as well as between the minus terminal (-) of the battery system 110 (or the second fuse 122 connected to the minus terminal (-) of the battery system 110) and the DC link minus terminal (-) 191 to measure the magnitudes of the output current and the input current.

Furthermore, the first and second gate drivers 341, 342 may apply gate voltages to the gate terminals of the first and second semiconductor switches 311, 312, respectively, constituting the semiconductor switch unit 310 under the control of the RBMS 210. In this case, when a gate voltage exceeding a threshold voltage of each of the first and second semiconductor switches 111, 112 is applied, a resistance value of an output terminal of each of the first and second semiconductor switches 111, 112 may become smaller than that of the input terminal thereof, and accordingly, the input terminals and output terminals of the first and second semiconductor switches 111, 112 may be respectively conducted to each other, thereby allowing the plus terminal (+) of the battery system 110 and the DC link plus terminal (+) 190 to be electrically connected.

On the contrary, when each of the first and second gate drivers 341, 342 applies a gate voltage lower than a preset threshold voltage to the gate terminal of each of the first and second semiconductor switches 311, 312, or does not apply the gate voltage, a resistance value of the output terminal of each of the first and second semiconductor switches 311, 312 may be equal to or greater than that of the input terminal thereof.

Therefore, the input terminals and the output terminals of the first and second semiconductor switches 311n 312 may not respectively be conducted to each other, and the plus terminal (+) of the battery system 110 and the DC link plus terminal (+) 190 may be electrically separated (insulated) from each other to disconnect the connection.

Meanwhile, the RBMS 210 may control an overall operation of the battery protection unit 200 according to an embodiment of the present disclosure. For example, the RBMS 210 may manage charge/discharge mode switching of the battery system 110, and control the solid-state circuit breaker 220 to electrically and physically connect between the battery system 110 and the line.

More specifically, the RBMS 210 may first control the first and second cut-off switches 231, 232 to physically connect between the battery system 110 and the line (DC link plus terminal (+) 190). Furthermore, the RBMS 210 may control each of the gate drivers 341, 342 to apply a voltage greater than a preset threshold voltage to the gate terminal of each of the semiconductor switches 311, 312.

Then, a resistance value of the output terminal of each of the semiconductor switches 311, 312 may be reduced by the applied gate voltage, and accordingly, the battery system 110 and the line (DC link plus terminal (+) 190) may be electrically connected to each other through at least one of the semiconductor switches 111, 112.

As such, when the battery system 110 and the line are physically and electrically connected to each other, the RBMS 210 may perform current monitoring through the current sensor 350 to protect the battery system 110.

Furthermore, as a result of the monitoring, when a fault current flows out of the battery system 110 or a fault current flows in from the line, the RBMS 210 may control each of the gate drivers 341, 342 to apply a voltage lower than a preset threshold voltage or not to apply the gate voltage to the gate terminal of each of the semiconductor switches 311, 312.

Then, a resistance value of the output terminal of each of the semiconductor switches 311, 312 may become larger than that of the input terminal thereof, and the battery system 110 and the line (DC link plus terminal (+) 190) may be electrically disconnected from each other.

In addition, when an electrical connection between the battery system 110 and the line is cut off, the RBMS 210 may control the first and second cut-off switches 231, 232 to be physically separated between the battery system 110 and the line (DC link plus terminal (+) 190). Accordingly, when a fault current is detected as a result of monitoring the current, a connection between the battery system 110 and the line may be electrically and physically cut off.

Meanwhile, the electrical cut-off may be performed by adjusting a gate voltage applied to the gate terminal of each of the semiconductor switches 311, 312. Therefore, when a fault current is generated, a connection between the battery system 110 and the line may be cut off within a very short time period.

Accordingly, the connection between the battery system 110 and the line may be cut off before the fuses (the first fuse 121, the second fuse 122) disposed between the solid-state circuit breaker 220 and the plus terminal (+) of the battery system 110 and between the solid-state circuit breaker 220 and the minus terminal (-) of the battery system 110 are blown by the fault current.

Therefore, the first fuse 121 and the second fuse 122 may be protected, and a state of being connected between the solid-state circuit breaker 220 and the plus terminal (+) of the battery system 110 and between the solid-state circuit breaker 220 and the minus terminal (-) of the battery system 110 may be maintained even when a connection between the battery system 110 and the line is cut off due to a fault current.

As a result, when a fault in the line or the battery system 110 is resolved to restore a current flowing between the battery system 110 and the line, the RBMS 210 may control the gate drivers 341, 342 of the solid-state circuit breaker 220 and the first and second cut-off switches 231, 232 to reconnect the battery system 110 and the line, thereby automatically restoring a connection between the battery system 11 and the line (DC link plus terminal (+) 190, the DC link minus terminal (-) 191).

Meanwhile, the current sensor 350 may be a GMR sensor using a giant magneto-resistance (GMR). The GMR sensor, which is a sensor using a phenomenon in which a magneto-resistance change of several tens of percent (about 70%) occurs in a multilayer thin film structure composed of a ferromagnetic thin film and a non-magnetic metal thin film, may have a smaller size than that of a Hall sensor to detect a magnitude of current in a non-contact manner similarly to the Hall sensor.

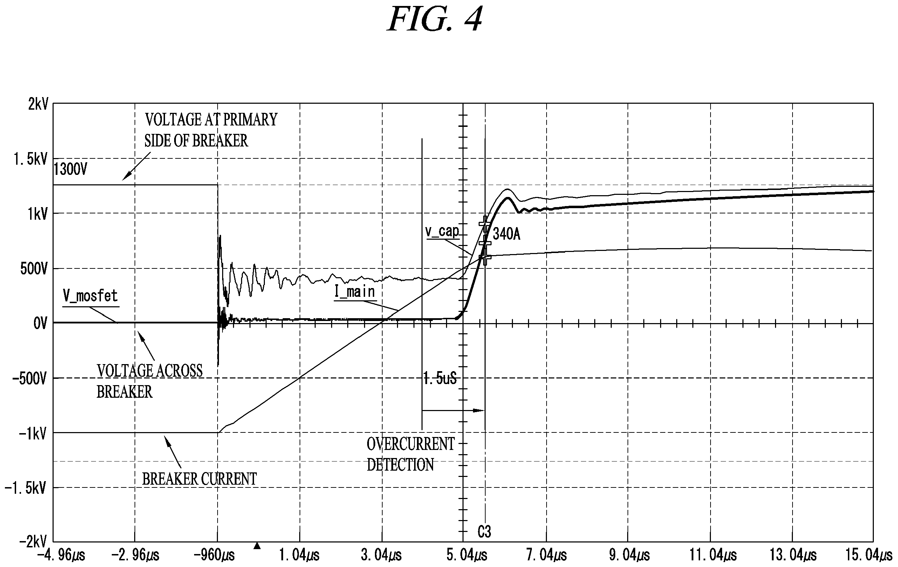

Meanwhile, the GMR sensor has a large magnetoresistance change rate, thereby having an advantage capable of greatly reducing a time period required to detect an overcurrent. FIG. 4 is a graph showing the overcurrent detection performance of the GMR sensor.

Referring to FIG. 4, it can be seen that in the case of the GMR sensor, a time period required to detect an overcurrent is very short, 1.5. As described above, a time period to detect an overcurrent is very short in the case of the GMR sensor, thereby having better current detection performance than the Hall sensor. In addition, a current is measured in a non-contact manner similarly to a Hall sensor, thereby having an advantage capable of reducing the effect of noise caused by the line.

Meanwhile, as described above, the battery protection unit 200 according to an embodiment of the present disclosure may control a circuit connection between the battery system 110 and the line using the solid-state circuit breaker 220 having a power semiconductor such as a MOSFET device instead of a mechanical molded case circuit breaker such as an existing MCCB. Therefore, the control unit of the battery protection unit 200 according to an embodiment of the present disclosure, that is, the RBMS 210, may perform a control function of the solid-state circuit breaker 220.

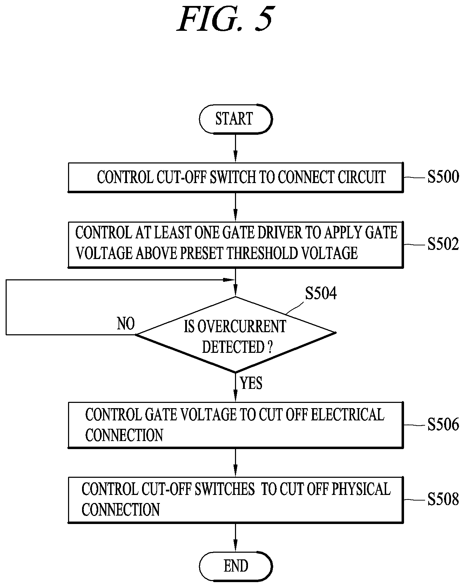

FIG. 5 is a flowchart showing an operation process of controlling the solid-state circuit breaker 220 by the RBMS 210 provided in the battery protection unit according to the embodiment of the present disclosure.

Referring to FIG. 5, the RBMS 210 according to an embodiment of the present disclosure may drive the battery system 110 in a discharge mode or a charge mode by the driving of a power conditioning system (PCS) or the like.

Then, the RBMS 210 may first control the first cut-off switch 231 and the second cut-off switch 232 to allow the battery system 110 and the line (DC link plus terminal (+) 190, DC link minus end (-) (191)) to be physically connected to each other (S500).

In addition, at least one of the first gate driver 341 and the second gate driver 342 may be controlled to apply a gate voltage above a preset threshold voltage to the gate terminal of at least one of the first and second semiconductor switches 311, 312 (S502).

Accordingly, the battery system 110 and the line (DC link plus terminal (+) 190, DC link minus terminal (-) 191) may be physically and electrically connected to each other to supply a current flowing out of the battery system 110 to a load through the line (when operating in a discharge mode), or to allow a current flowing in through the line to be input to the battery system 110 so as to charge batteries constituting the battery rack 111 (when operating in a charge mode).

Meanwhile, when the battery system 110 and the line are connected to each other through the steps S500 and S502, the RBMS 210 may detect whether an overcurrent exceeding a preset magnitude of a rated current flows out of the battery system 110 through the current sensor 350 or an overcurrent exceeding the magnitude of the rated current flows in from the line.

That is, the RBMS 210 may detect whether a current flowing between the battery system 110 and the line currently connected to each other is an overcurrent through the current sensor 350 (S504).

As a result of the detection, in a case where an overcurrent is not detected, the RBMS 210 may maintain a current state in which the battery system 110 and the line are connected to each other, and maintain a state of detecting an overcurrent without any change.

On the contrary, when an overcurrent is detected, the RBMS 210 may control at least one of the first gate driver 341 and the second gate driver 342 to apply a gate voltage below a preset threshold voltage or not to apply a gate voltage to the gate terminal of at least one of the first and second semiconductor switches 311, 312 (S506).

In this case, the RBMS 210 may control both the first gate driver 341 and the second gate driver 342 to apply a gate voltage below the threshold voltage or not to apply a gate voltage.

Alternatively, the RBMS 210 may be controlled to apply a gate voltage below the threshold voltage to only either one of the first gate driver 341 and the second gate driver 342 or not to apply a gate voltage thereto according to a current driving mode of the battery protection unit 200.

For an example, when the battery protection unit 200 currently operates in a discharge mode, the RBMS 210 may control only the first gate driver 341. In this case, since a gate voltage above the threshold voltage is still applied to the gate terminal of the second semiconductor switch 312, the input terminal and the output terminal of the second semiconductor switch 312 maintain a state of being electrically conducted to each other.

On the contrary, since a gate voltage below the threshold voltage or no gate voltage is applied to the gate terminal of the first semiconductor switch 311, the input terminal and the output terminal of the first semiconductor switch 311 may be electrically insulated from each other.

Meanwhile, between the source terminal and the drain terminal of the first semiconductor switch 311, the first diode 321 may be disposed in a reverse direction with respect to a current flow from the plus terminal (+) of the battery system 110 to the DC link plus terminal (+) 190.

Therefore, it may be possible to prevent a current from flowing from the drain terminal to the source terminal of the first semiconductor switch 311 when the circuit is cut off. Accordingly, the plus terminal (+) of the battery system 110 and the DC link plus terminal (+) 190 may be electrically insulated from each other.

Meanwhile, when the battery protection unit 200 currently operates in a charge mode, the RBMS 210 may control only the second gate driver 342. In this case, since a gate voltage above the threshold voltage is still applied to the gate terminal of the first semiconductor switch 311, the input terminal and the output terminal of the first semiconductor switch 311 maintain a state of being electrically conducted to each other.

On the contrary, since a gate voltage below the threshold voltage or no gate voltage is applied to the gate terminal of the second semiconductor switch 312, the input terminal and the output terminal of the second semiconductor switch 312 may be electrically insulated from each other.

Meanwhile, between the source terminal and the drain terminal of the second semiconductor switch 312, the second diode 322 may be disposed in a reverse direction with respect to a current flow from the DC link plus terminal (+) 190 to the plus terminal (+) of the battery system 110.

Therefore, it may be possible to prevent a current from flowing from the drain terminal to the source terminal of the second semiconductor switch 312 when the circuit is cut off. Accordingly, the DC link plus terminal (+) 190 and the plus terminal (+) of the battery system 110 may be electrically insulated from each other.

Meanwhile, when the battery system 110 and the line are electrically insulated from each other by controlling at least one gate driver in the step S506, the RBMS 210 may control the first and second cut-off switches 231, 232 to physically insulate between the plus terminal (+) of the battery system 110 and the DC link plus terminal (+) 190 and between the minus terminal (-) of the battery system 110 and the DC link minus terminal (-) 191 (S508).

Accordingly, when an overcurrent, that is, a fault current, is generated from the battery system 110 or the line, the solid-state circuit breaker 220 may electrically and physically cut off the battery system 110 from the line under the control of the RBMS 210.

The above-described present disclosure may be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet).

The above detailed description is therefore to be construed in all aspects as illustrative and not restrictive. The scope of the invention should be determined by reasonable interpretation of the appended claims and all changes that come within the equivalent scope of the invention are included in the scope of the invention.

## Claims

1. A battery protection unit (BPU) connecting between a battery system and a line, the battery protection unit comprising:
a solid-state circuit breaker disposed between the battery system and the line, the solid-state circuit breaker comprising a semiconductor switch electrically connecting or insulating between the battery system and the line according to a gate voltage applied to a gate terminal thereof;
a cut-off switch physically connecting or separating between the solid-state circuit breaker and the line; and
a rack battery management system (RBMS) that controls a gate driver applying the gate voltage according to a result of sensing a current flowing between the battery system and the line to insulate between the battery system and the line, and controls the cut-off switch to physically separate the solid-state circuit breaker from the line when the battery system is connected to the line.

2. The battery protection unit of claim 1, wherein the solid-state circuit breaker comprises:
a first semiconductor switch having a source terminal and a drain terminal disposed to form a current flow from the battery system to the line;
a second semiconductor switch connected in series to the first semiconductor switch, the second semiconductor switch having a source terminal and a drain terminal disposed to form a current flow from the line to the battery system; and
a first gate driver that applies a gate voltage to a gate terminal of the first semiconductor switch, and a second gate driver that applies a gate voltage to a gate terminal of the second semiconductor switch under the control of the rack battery management system, and
wherein the rack battery management system controls at least one of the first and second gate drivers to apply a gate voltage having a preset voltage when the battery system is physically connected to the line through the solid-state circuit breaker so as to electrically connect between the battery system and the line.

3. The battery protection unit of claim 2, wherein the rack battery management system controls the battery system to operate in either one of a discharge mode in which a current flows out of the battery system or a charge mode in which the battery system receives a current from the line, and controls either one of the first and second gate drivers to apply a gate voltage below the preset voltage according to a result of sensing the current, and
wherein either one gate driver whose gate voltage is controlled according to the result of sensing the current is different from each other according to an operation mode of the battery system.

4. The battery protection unit of claim 3, wherein the rack battery management system controls the first gate driver to apply a gate voltage below the preset voltage when the battery system is in a discharge mode, and controls the second gate driver to apply a gate voltage below the preset voltage when the battery system is in a charge mode.

5. The battery protection unit of claim 2, wherein the first and second semiconductor switches are configured with N-channel MOSFET devices having source terminals and drain terminals disposed in opposite directions to each other, and configured to include diodes, respectively, disposed in reverse directions with respect to current flows of the N-channel MOSFET devices.

6. The battery protection unit of claim 1, wherein the solid-state circuit breaker comprises a current sensor that senses a current flowing between the battery system and the line, and
wherein the current sensor is a GMR sensor using a giant magneto-resistance (GMR) device.

7. The battery protection unit of claim 1, wherein the plus terminal (+) and the minus terminal (-) of the battery system are connected to the semiconductor switch by way of fuses, respectively.

8. The battery protection unit of claim 2, wherein the preset voltage is a threshold voltage for allowing the input terminal and the output terminal of the first semiconductor switch or the second semiconductor switch to be conducted to each other.

9. A method of controlling a battery protection unit (BPU) comprising a solid-state circuit breaker connecting between a battery system and a line, the method comprising:
controlling, by a rack battery management system (RBMS) of the battery protection unit, a cut-off switch disposed between the solid-state circuit breaker and the line to physically connect between the battery system and the line;
controlling, by the rack battery management system, a semiconductor switch provided in the solid-state circuit breaker to electrically connect between the battery system and the line;
detecting, by the rack battery management system, an overcurrent above a preset magnitude from a current flowing between the battery system and the line;
controlling, by the rack battery management system, a gate driver that applies a gate voltage to the semiconductor switch according to a result of the detection to insulate between the battery system and the line; and
controlling, by the rack battery management system, the cut-off switch to physically separate the solid-state circuit breaker from the line.

10. The method of claim 9, wherein the solid-state circuit breaker comprises:
a first semiconductor switch having a source terminal and a drain terminal disposed to form a current flow from the battery system to the line;
a second semiconductor switch connected in series to the first semiconductor switch, the second semiconductor switch having a source terminal and a drain terminal disposed to form a current flow from the line to the battery system; and
a first gate driver that applies a gate voltage to a gate terminal of the first semiconductor switch, and a second gate driver that applies a gate voltage to a gate terminal of the second semiconductor switch under the control of the rack battery management system.

11. The method of claim 10, wherein the electrically connecting between the battery system and the line comprises:
driving the battery system in either one of a discharge mode and a charge mode; and
controlling at least one of the first and second gate drivers to apply a gate voltage above a preset threshold voltage according to an operation mode of the battery system.

12. The method of claim 11, wherein the controlling of the gate driver to insulate between the battery system and the line is controlling different gate drivers to apply a gate voltage below a preset threshold voltage according to an operation mode of the battery system.

13. The method of claim 12, wherein the controlling of different gate drivers according to the operation mode of the battery system comprises:
controlling the first gate driver to apply a gate voltage below the threshold voltage when the battery system is driven in a discharge mode; and
controlling the second gate driver to apply a gate voltage below the threshold voltage when the battery system is driven in a charge mode.

14. The method of claim 10, wherein the controlling of the gate driver to insulate between the battery system and the line is controlling both the first gate driver and the second gate driver to apply a gate voltage below a preset threshold voltage.

15. The method of claim 9, wherein the solid-state circuit breaker comprises a GMR sensor using a giant magneto-resistance (GMR) as a current sensor, and
wherein the detecting of an overcurrent is detecting the overcurrent from a current flowing between the battery system and the line through the GMR sensor.
